# EUROPEAN PATENT APPLICATION

(11) **EP 2 690 695 A1**
(43) Date of publication of application: **29.01.2014**
(21) Application number: 12761149.9
(22) Date of filing: 07.03.2012
(51) Int. Cl.: H01M 8/04, H01M 8/00

(54) **FUEL CELL POWER GENERATION APPARATUS**

(30) Priority: 23.03.2011 JP 2011063700; 06.03.2012 JP 2012049208
(71) Applicant: Panasonic Corporation, Osaka 571-8501 (JP)
(72) Inventor: KAKU, Hiroaki, Osaka 540-6207 (JP); MIYAUCHI, Shinji, Osaka 540-6207 (JP); OISHI, Hitoshi, Osaka 540-6207 (JP); ZHANG, Rui, Osaka 540-6207 (JP)
(74) Representative: Grünecker, Kinkeldey, Stockmair & Schwanhäusser
(86) International application number: PCT/JP2012/001567
(87) International publication number: WO 2012/127800

(57) **Abstract**

A fuel cell power generation apparatus (1) includes an installation environment information inputting section (25), a notification device (26) and a controller (23). The controller (23) is configured to set a first period between a maintenance time and a notification time based on the installation environment information input by an installation environment information inputting section.

## Description

### Technical Field

The present invention relates to a fuel cell power generation apparatus. Particularly, the present invention relates to a fuel cell power generation apparatus which requires maintenance on a regular basis.

### Background Art

As a conventional fuel cell, a desulfurization agent replacement system which notifies a replacement time of a desulfurization agent has been known. For example, when an accumulated power generation amount reaches a predetermined value or more, a power generation amount measuring device predicts that the desulfurization agent will soon come to the end of its life, and a replacement time of a desulfurization agent cartridge is displayed on a display device (see e.g., Patent Literature 1)

### Citation Lists

### Patent Literature

Patent Literature 1: Japanese Laid-Open Patent Application Publication No. 2004-362856

### Summary of the Invention

### Technical Problem

A fuel cell power generation apparatus is a relatively large-sized apparatus, and therefore is often installed in an outdoor location. Therefore, the fuel cell power generation apparatus might be installed in locations in environmental conditions (e.g., continual rain, heavy snow, short duration of sunshine, etc..) under which it is difficult to carry out the maintenance. In this case, even when the replacement time of the desulfurization agent cartridge is displayed on the display device, a maintenance operator might not be able to carry out maintenance of the desulfurization agent cartridge at this replacement time.

A maintenance time of the fuel cell power generation apparatus changes depending on an operation status of the fuel cell, etc.. This makes it difficult to preset the maintenance time.

If maintenance of the fuel cell power generation apparatus is carried out at a time much earlier than the maintenance time, a usage period of components for which maintenance is performed is left wastefully.

The present invention is developed to solve the above described problem, and an object of the present invention is to provide a fuel cell power generation apparatus which allows maintenance to be carried out at a more appropriate time.

A fuel cell power generation apparatus for which maintenance is performed, according to an aspect of the present invention, comprises an installation environment information inputting section which inputs installation environment information of the fuel cell power generation apparatus; a notification device which notifies that maintenance of the fuel cell power generation apparatus should be carried out, at a notification time set before a maintenance time of the fuel cell power generation apparatus; and a controller configured to set a first period between the maintenance time and the notification time based on the installation environment information input by the installation environment information inputting section.

### Advantageous Effects of the Invention

The present invention has the above described configuration, and has an advantage that it is possible to provide a fuel cell power generation apparatus which allows maintenance to be performed at a more appropriate time.

The above and further objects, features and advantages of the invention will more fully be apparent from the following detailed description with reference to the accompanying drawings.

### Brief Description of the Drawings

[Fig. 1] Fig. 1 is a block diagram showing a function of a fuel cell power generation apparatus according to Embodiment 2 of the present invention.
[Fig. 2] Fig. 2 is a view showing a relation between installation environment information of the fuel cell power generation apparatus of Fig. 1, special periods, and first periods.
[Fig. 3] Fig. 3 is a flowchart showing an exemplary operation of the fuel cell power generation apparatus of Fig. 1.
[Fig. 4] Fig. 4 is a block diagram showing a function of a fuel cell power generation apparatus according to Embodiment 1 of the present invention.
[Fig. 5] Fig. 5 is a view showing another relation between installation environment information (special areas) of the fuel cell power generation apparatus and first periods.

### Description of the Embodiments

A fuel cell power generation apparatus for which maintenance is performed, according to an embodiment of the present invention, comprises an installation environment information inputting section which inputs installation environment information of the fuel cell power generation apparatus; a notification device which notifies that maintenance of the fuel cell power generation apparatus should be carried out, at a notification time set before a maintenance time of the fuel cell power generation apparatus; and a controller configured to set a first period between the maintenance time and the notification time based on the installation environment information input by the installation environment information inputting section.

The fuel cell power generation apparatus may further comprise: an operation amount obtaining section which obtains an operation amount of the fuel cell power generation apparatus; wherein the controller is configured to specify the maintenance time based on the operation amount.

In the fuel cell power generation apparatus, the operation amount obtaining section may determine the operation amount based on at least one of: an accumulated power generation time of the fuel cell power generation apparatus, an accumulated power generation amount of the fuel cell power generation apparatus; and an accumulated number of times of power generation of the fuel cell power generation apparatus,
a time that passes after the fuel cell power generation apparatus is installed; an accumulated energization time for which at least either one of the controller and an auxiliary device of the fuel cell power generation apparatus is supplied with electric power; an accumulated operation time and an accumulated number of times of operation of a device constituting the fuel cell power generation apparatus; and an accumulated heat supply amount of the fuel cell power generation apparatus.

In the cell power generation apparatus, the controller may be configured to set the first period longer, when it is determined that the maintenance time falls into a special period when it is more difficult to carry out the maintenance than in another period, based on the installation environment information, than when it is determined that the maintenance time does not fall into the special period, based on the installation environment information.

In the fuel cell power generation apparatus, the controller may be configured to set the first period such that the notification time comes before start of the special period, when it is determined that the maintenance time falls into the special period.

In the fuel cell power generation apparatus, the controller may be configured to set the first period longer, when it is determined that an installation location of the fuel cell power generation apparatus falls into a special area where it is more difficult to carry out the maintenance than in another area, based on the installation environment information, than when it is determined that the installation location of the fuel cell power generation apparatus does not fall into the special area, based on the installation environment information.

In the fuel cell power generation apparatus, the installation environment information inputting section may input as the installation environment information, at least one of a signal input by a temperature detector disposed at an installation location of the fuel cell power generation apparatus, and a signal input by a temperature detector disposed at a water supply passage connecting a water supply source to the fuel cell power generation apparatus.

In the fuel cell power generation apparatus, the installation environment information inputting section may input as the installation environment information, at least one of position information of a position at which the fuel cell power generation apparatus is installed, elevation information of an elevation at which the fuel cell power generation apparatus is installed, and maintenance company information of a maintenance company who carries out the maintenance.

In the fuel cell power generation apparatus, the installation environment information inputting section may input as the installation environment information, learning information obtained by learning about an environment in which the fuel cell power generation apparatus is installed.

Hereinafter, embodiments of the present invention will be described with reference to the drawings.

Throughout the drawings, the same or corresponding components are identified by the same reference symbols, and will not be described in repetition.

### «Embodiment 1»

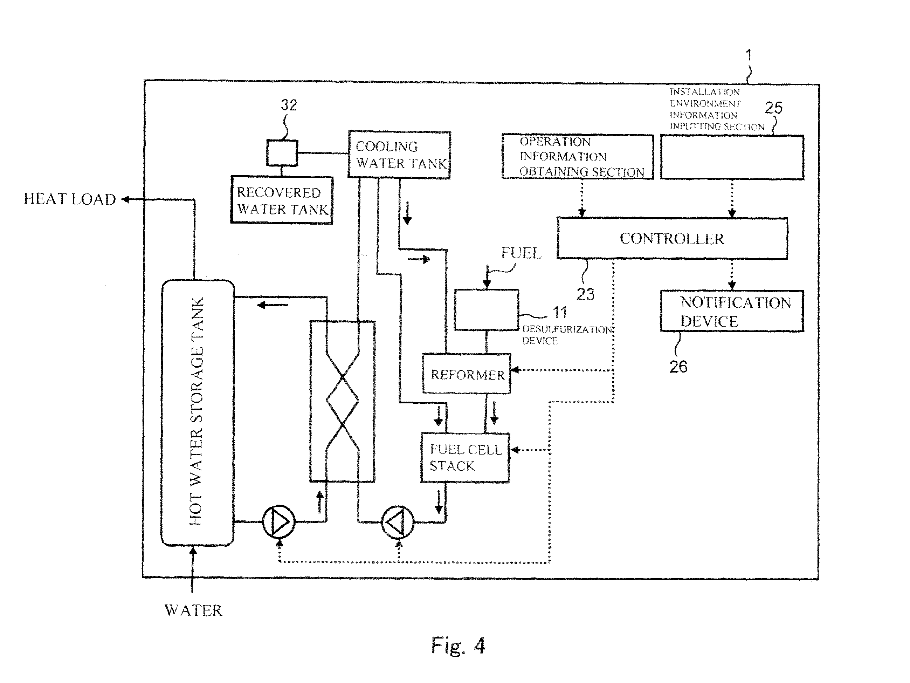

Fig. 4 is a block diagram showing a function of a fuel cell power generation apparatus according to Embodiment 1.

A fuel cell power generation apparatus 1 is a fuel cell power generation apparatus 1 for which maintenance is performed. The fuel cell power generation apparatus 1 includes an installation environment information inputting section 25 which inputs installation environment information of the fuel cell power generation apparatus 1, a notification device 26 which notifies that maintenance of the fuel cell power generation apparatus 1 should be carried out, at a notification time set before a maintenance time of the fuel cell power generation apparatus 1, and a controller 23 configured to set a first period between the maintenance time and the notification time based on the installation environment information input by the installation environment information inputting section 25.

In the fuel cell power generation apparatus 1 having the above configuration, information (installation environment information) relating to an environment in which the fuel cell power generation apparatus 1 is installed is input by the installation environment information inputting section 25. The controller 23 decides the first period based on the installation environment information. Thus, the notification time is decided based on the first time and a maintenance time. The notification device 26 notifies that maintenance of the fuel cell power generation apparatus 1 should be carried out, at the notification time,

In accordance with the fuel cell power generation apparatus 1 having the above configuration, since the notification time is derived based on the installation environment information of the fuel cell power generation apparatus 1, a maintenance status of the fuel cell power generation apparatus is taken into consideration to derive the notification time.

Therefore, even if the fuel cell power generation apparatus is installed in a location in environment conditions under which maintenance is difficult, it is notified that maintenance should be carried out at a time when the maintenance is possible. This can avoid a situation in which a maintenance operator cannot carry out maintenance.

On the other hand, the notification time is not unnecessarily earlier time with respect to the life. This can avoid a situation in which components will be replaced at an unnecessarily earlier time.

### «Embodiment 2»

Embodiment 2 describes an example in which the fuel cell power generation apparatus of Embodiment 1 is applied to a fuel cell power generation apparatus including components which require maintenance, such as a desulfurization device and an ion exchange resin.

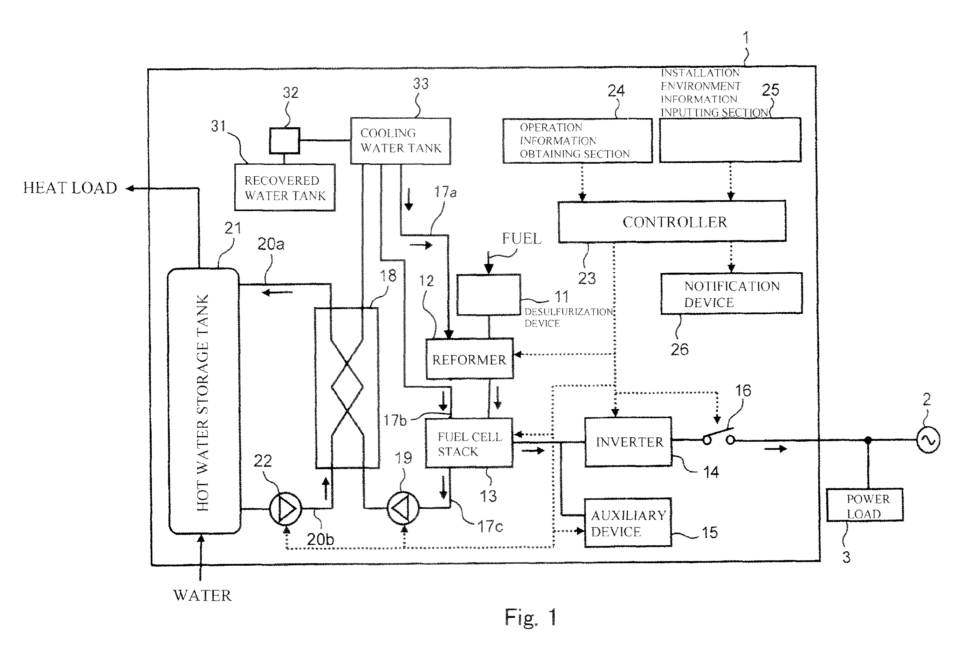

Fig. 1 is a block diagram showing a function of the fuel cell power generation apparatus according to Embodiment 2.

The fuel cell power generation apparatus 1 is connected to an electric power utility 2 and an electric power load 3.

The electric power utility 2 is, for example, a single-phase three-wire AC power supply (utility power supply).

The electric power load 3 is, for example, a television, an air-conditioner, etc., used at home, and is a device which consumes AC power supplied from the electric power utility 2 or from the fuel cell power generation apparatus 1.

The fuel cell power generation apparatus 1 is, for example, an apparatus which generates electric power by causing hydrogen and oxygen to electrochemically react with each other. The fuel cell power generation apparatus 1 includes a desulfurization device 11, a reformer 12, a fuel cell stack 13, an inverter 14, an auxiliary device 15, a breaker 16, a cooling pipe 17, a heat exchanger 18, a cooling water pump 19, an exhaust heat recovery pipe 20, a hot water storage tank 21, an exhaust heat recovery pump 22, a controller 23, an operation information obtaining section 24, an installation information inputting section 25, and a notification device 26.

The desulfurization device 11 is a device which removes a sulfur compound from a fuel such as a city gas, i.e., device for performing desulfurization. The desulfurization device 11 includes a desulfurization agent cartridge for storing a desulfurization agent for adsorbing the sulfur compound.

The reformer 12 is a device for reforming the fuel from which the sulfur compound has been removed by the desulfurization device 11 into a fuel gas containing hydrogen in great quantity. The fuel gas generated in the reformer 12 is supplied to the fuel cell stack 13.

The fuel cell stack 13 is a device which generates DC power by causing the hydrogen in the fuel gas and an oxidizing gas to electrochemically reach with each other. As the fuel cell stack 13, stacks of known fuel cells of various types may be used. As the oxidizing gas, for example, oxygen in air is used. An air supply device (not shown) such as a blower supplies the air to the fuel cell stack 13. The DC power generated in the fuel cell stack 13 is supplied to the inverter 14 and to the auxiliary device 15.

The inverter 14 converts the DC power generated in the fuel cell stack 13 into AC power having a frequency equal to a frequency of the AC power in the electric power utility 2. The AC power generated by conversion in the inverter 14 is supplied to the electric power utility 2 and to the electric power load 3 via the breaker 16. The breaker 16 is configured to open/close a supply path through which the AC power is supplied from the inverter 14 to the electric power utility 2 or to the electric power load 3.

The auxiliary device 15 is a device for operating the fuel cell power generation apparatus 1.

The recovered water tank 31 is configured to store water recovered by a condenser (not shown) from an unused fuel gas and an unused oxidizing gas which are discharged from the fuel cell stack 13. The water is supplied from the recovered water tank 31 to a cooling water tank 33 through a water purifier 32. The water purifier 32 is filled with an ion exchange resin. Alternatively, the water purifier 32 may be provided with an active carbon filter or a reverse osmosis membrane. The water is supplied from the cooling water tank 33 to the reformer 12 via a water supply pipe 17a, as reforming water. The water in the cooling water tank 33 is circulated through the cooling pipe 17b, the fuel cell stack 13, a cooling pipe 17c and the heat exchanger 18, as the cooling water for cooling the fuel cell stack 13. This circulation is performed by using a cooling water pump 19 attached on the cooling pipe 17c. The cooling water increases its temperature by heat generated in the fuel cell stack 13 and flows into the heat exchanger 18. The cooling water having the increased temperature is cooled by the heat exchanger 18 and returns to the cooling water tank 33.

The heat exchanger 18 is configured such that one of heat exchange passages is connected to the cooling pipe 17c and the other heat exchange passage is connected to exhaust heat recovery pipes 20a, 20b. The heat exchanger 18 recovers heat from the cooling water in the cooling pipe 17c and transmits the heat to the water in the exhaust heat recovery pipe 20b. Thus, the heat exchanger 18 cools the cooling water with the increased temperature in the cooling pipe 17b.

The exhaust heat recovery pipes 20a, 20b connect the heat exchanger 18 to the hot water storage tank 21. The exhaust heat recovery pipe 20b is provided with an exhaust heat recovery pump 22. The exhaust heat recovery pump 22 circulates the water supplied to the hot water storage tank 21 such that the water passes through the heat exchanger 18 and returns to the hot water storage tank 21.

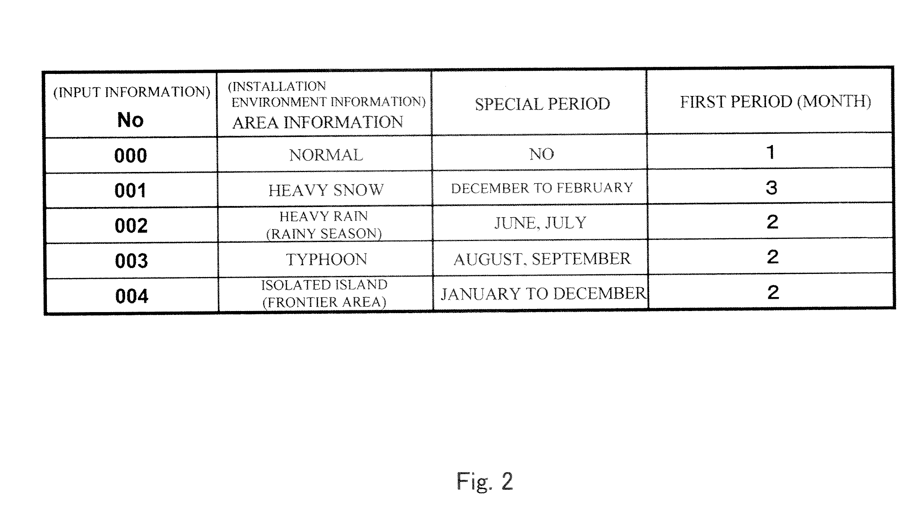

The controller 23 controls the operation of each of the reformer 12, the fuel cell stack 13, the inverter 14, the auxiliary device 15, the breaker 16, the cooling water pump 19, and the exhaust heat recovery pump 22. The controller 23 includes a time measuring section, a calculator section and a data storage section. The time measuring section is constituted by, for example, a timer. The calculator section is constituted by, for example, a CPU and a memory. The data storage section is constituted by, for example, a memory. The data storage section stores, for example, a relation between installation environment information, special periods, and first periods shown in Fig. 2.

It is sufficient that the controller 23 may have a calculator function. Examples of the controller 23 are a microcontroller, a CPU, a MPU, a logic circuit, a PLC (Programmable Logic Controller), etc.. The operation information obtaining section 24 and the installation environment information inputting section 25 may be included in the controller 23. In this case, the controller 23 may be a single controller which performs centralized control or a plurality of controllers which perform distributed control. For example, the operation information obtaining section 24 and the installation environment information inputting section 25 may be implemented by programs stored in the single controller. Or, the operation information obtaining section 24 and the installation environment information inputting section 25 may be implemented by four controllers having their functions, respectively.

The controller 23 plans operation times of the fuel cell power generation apparatus 1 for each predetermined time (e.g., for each day, for each week) so that the fuel cell power generation apparatus 1 performs power generation during a time period when energy saving and a high energy efficiency can be achieved, for example, and controls the operation of the fuel cell power generation apparatus 1. For example, the controller 23 gathers data of an electric power load and a heat load which are consumed by a user at home in one day, by using sensors, or the like. Then, the controller 23 calculates a power generation start time and a power generation end time so that hot water is stored and the electric power is generated during a time period for which there is a greatest load. The controller 23 controls the operation of each of the devices 12 to 16, 19, 22, in the fuel cell power generation apparatus 1, during a period of time from the calculated power generation start time to the calculated power generation end time. Thus, sufficient hot water and electric power generated in power generation can be supplied when there is a great load used by the user at home (i.e., amount of consumption of hot water and electric power is great), which can improve levels of energy saving and economic efficiency.

The controller 23 specifies a maintenance time based on an operation amount input by the operation information obtaining section 24. The maintenance time is derived according to a formula K = H × (J - I) /I. K indicates a period from a current point to the maintenance time. H indicates a period from a previous maintenance to the current time. I indicates an operation amount during the H period. J indicates an operation amount during a period (H + K) from the previous maintenance to a next maintenance. A reference period of maintenance is decided with a relation with the operation amount for each of the components for which the maintenance is performed. The maintenance time changes depending on the amount of operation performed. As the amount of operation performed increases, the components for which the maintenance is performed wear out more, and correspondingly, the time period from the current time to the maintenance time becomes shorter. The components for which the maintenance is performed are, for example, components which degrade with a passage of the operation time, etc.. The components for which the maintenance is performed include the desulfurization device 11, the water purifier 32, an air filter, a combustion flow meter filter, a combustible gas sensor, a CO sensor, etc.. Regarding the desulfurization device 11, the desulfurization agent cartridge is required to replaced. Regarding the water purifier 32, the ion exchange resin is required to be replaced. A maintenance reference period regarding the components for which the maintenance is performed, such as the desulfurization device 11, the water purifier 32, the air filter, and the combustion flow meter filter, corresponds to, for example, an accumulated energization time (operation amount) of 2.5 years. And, a maintenance reference period regarding the components for which the maintenance is performed, such as the combustible gas sensor and the CO sensor corresponds to, for example, an accumulated energization time (operation amount) of 5.0 years.

The controller 23 sets the first period between the maintenance time and the notification time based on the installation environment information. This is because of the fact that, since the maintenance time changes depending on the amount of operation performed, it is sometimes difficult to carry out the maintenance at the maintenance time, and therefore, in such cases, it is necessary to adjust the notification time. The installation environment information is input by the installation environment information inputting section 25. A level of difficulty with which the maintenance is carried out changes depending on the environment in which the fuel cell power generation apparatus 1 is installed. In view of this, the installation environment information and the first period are related to each other to have a correspondence such that the first period is longer for the installation environment information corresponding to a higher level of difficulty with which the maintenance is carried out. For example, this correspondence is predetermined as shown in Fig. 2. The first period may be equal to or longer than zero. That is, if the fuel cell power generation apparatus I is not installed in an environment under which it is difficult to carry out the maintenance, it is not difficult to carry out the maintenance at a specified maintenance time. Therefore, the first period is zero, and the notification time is set to the same day as a day of the maintenance time of the fuel cell power generation apparatus 1. On the other hand, if the fuel cell power generation apparatus 1 is installed in an environment under which it is difficult to carry out the maintenance, it is difficult to carry out the maintenance at a specified time. Therefore, the first period is longer than zero. The notification time is set to a time before the maintenance time of the fuel cell power generation apparatus 1. The first period is set longer as a level of difficulty with which the maintenance is carried out is higher.

The controller 23 determines whether or not the maintenance time falls into a special period, based on the installation environment information. The special period is defined as a period when it is more difficult to carry out the maintenance than in another period. The controller 23 sets the first period longer, when it is determined that the maintenance time falls into the special period than when it is determined that the maintenance time does not fall into the special period. In addition, the controller 23 sets the first period such that the notification time comes before start of the special period when it is determined that the maintenance time falls into the special period.

The controller 23 determines whether or not an installation location of the fuel cell power generation apparatus 1 falls into a special area, based on the installation environment information. The special area is an area where it is more difficult to carry out the maintenance than in another area. The controller 23 sets the first period longer when it is determined that the installation location of the fuel cell power generation apparatus 1 falls into the special area than when it is determined that the installation location of the fuel cell power generation apparatus 1 does not fall into the special area.

The operation information obtaining section 24 obtains the operation amount of the fuel cell power generation apparatus 1. The operation amount is decided based on at least one of, for example, an accumulated power generation time of the fuel cell power generation apparatus 1, an accumulated power generation amount of the fuel cell power generation apparatus 1, and an accumulated number of times of power generation of the fuel cell power generation apparatus 1, a time that passes after the fuel cell power generation apparatus 1 is installed, an accumulated energization time for which at least one of the controller 23 and the auxiliary device of the fuel cell power generation apparatus 1 is supplied with the electric power, an accumulated operation time and accumulated number of times of the operation of each of the devices constituting the fuel cell power generation apparatus 1, an accumulated heat supply amount of the fuel cell power generation apparatus 1, and an operation time of components for which the maintenance is performed. Note that the controller 23 and the auxiliary device of the fuel cell power generation apparatus 1 are supplied with the electric power from the electric power utility 2, the fuel cell stack 13, or the like. In a case where an outside electric power supply such as a storage battery or a solar light power generation apparatus is connected to the fuel cell power generation apparatus 1, the controller 23 and the auxiliary device of the fuel cell power generation apparatus 1 can be supplied with the electric power from the outside electric power supply. The time that passes after the fuel cell power generation apparatus 1 is installed is a time measured by a real time clock, etc., operating by a battery or the like even after a main power supply is OFF. The devices constituting the fuel cell power generation apparatus 1 may include, for example, the fuel cell stack 13, the reformer 12, the cooling water pump 19, etc.. The accumulated heat supply amount of the fuel cell power generation apparatus 1 is derived from, for example, a temperature and amount of hot water supplied from the hot water storage tank 21.

The installation environment information inputting section 25 inputs (obtain) the installation environment information of the fuel cell power generation apparatus 1. The installation environment information inputting section 25 inputs (obtains) the installation environment information from, for example, an input device such as a switch, GPS, a network such as internet, a communication line., a calendar, a sensor for detecting a temperature, a sensor for detecting an elevation, etc.. As the sensors, there are a temperature detector, an elevation detector, an air pressure detector, and a humidity sensor, which are disposed in a location where the fuel cell power generation apparatus 1 is installed, a temperature detector disposed at a water supply passage connecting a water supply source to the fuel cell power generation apparatus 1, etc.. The installation environment information inputting section 25 may include a memory for storing the installation environment information, etc..

The installation environment information inputting section 25 inputs as the installation environment information, at least one of temperature information of the water supply passage, temperature information of the location where the fuel cell power generation apparatus 1 is installed, position information and elevation information of the location where the fuel cell power generation apparatus 1 is installed, and maintenance company information of a maintenance company who carries out maintenance. As the position information, there are Japanese local area names such as Hokkaido, Tohoku, Kanto, Hokuriku, Tokai, Kinki, Chugoku, Shikoku, Kyusyu, and Okinawa. Or, as the position information, there are coordinates such as a longitude and a latitude, a country name such as Japan. The maintenance company information of the maintenance company which carries out maintenance is set in view of a degree of easiness with which a maintenance company carries out the maintenance, for example, the number of operators, a range of an area which can be covered by the maintenance company, a degree of easiness with which the maintenance company moves to a maintenance location, such as an isolated island, an intermountain region, a plain field, etc..

The installation environment information may be input in shipment or construction before the fuel cell power generation apparatus 1 is installed, or may be input, always, at predetermined times or desired times after the fuel cell power generation apparatus 1 is installed.

The installation environment information may be input by using the installation environment information inputting section 25, or the installation environment information inputting section 25 may input the installation environment information automatically.

The notification device 26 notifies, at a notification time that maintenance of the fuel cell power generation apparatus 1 should be carried out. The controller 23 decides the notification time. The notification device 26 is a device for notifying operation information, the maintenance information, an abnormality, etc., of the fuel cell power generation apparatus 1 in the form of sound information or visual information. As the notification device 26, for example, a buzzer, a liquid crystal display (LCD), a 7-segment display, etc., may be used. Note that the notification device 26 may be configured to notify a maintenance terminal of the maintenance company that maintenance of the fuel cell power generation apparatus 1 will be necessary, via a communication line.

Next, description will be given of an exemplary operation of the fuel cell power generation apparatus I which relates to notification of the maintenance.

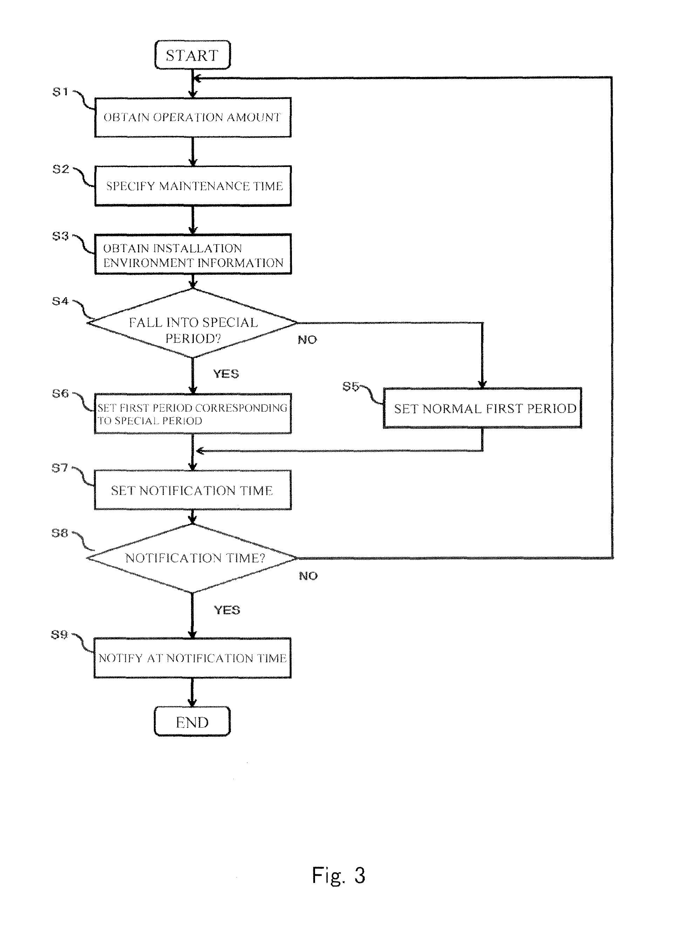

Fig. 3 is a flowchart showing an exemplary operation of the fuel cell power generation apparatus 1.

The operation information obtaining section 24 measures an energization time of the fuel cell power generation apparatus 1 from a previous maintenance to a current time, accumulates the energization time, and obtains the accumulated energization time as the operation amount of the fuel cell power generation apparatus 1 (step S1). The operation information obtaining section 24 outputs the accumulated energization time to the controller 23.

The controller 23 specifies a maintenance time of the desulfurization agent cartridge of the desulfurization device 11, based on the accumulated energization time (step S2). For example, the controller 23 calculates the maintenance time based on G = (E - F) /730. G indicates a time period (month) from the current time to the maintenance time. E indicates an accumulated energization time (hour) corresponding to a reference period of the maintenance. F indicates an accumulated energization time (hour) which actually occurred. 730 (month/hour) indicates 365 (day/year) × 24 (hour/day) / 12 (month /year). For example, in a case where accumulated energization time corresponding to the reference period of the maintenance: E is 21,600 (hour) and the accumulated energization time which actually occurred: F is 19,410 (hour), the period from the current time to the maintenance time: G is 3 (month). Therefore, the maintenance time is 3 months after from the current time.

The installation environment information inputting section 25 obtains the installation environment information (step S3). For example, when the installation operator inputs the input information shown in Fig. 2 by using a switch or the like, the installation environment information inputting section 25 obtains area information corresponding to the input information as the installation environment information. Specifically, in a case where the fuel cell power generation apparatus 1 is installed in a heavy snow area such as Hokkaido, the input information "001" is input, and the installation environment information inputting section 25 obtains the installation environment information "heavy snow."

The controller 23 determines whether or not the maintenance time falls into the special period, based on the installation environment information (step S4). For example, the controller 23 derives the special period "December to February" corresponding to the installation environment information "heavy snow", with reference to the relation among the installation environment information, the special periods, and the first periods shown in Fig. 2. Therefore, the controller 23 determines whether or not the calculated maintenance time falls into the special period "December to February."

For example, if the current time is January, the maintenance time is April. Therefore, the maintenance time does not fall into the special period (step S4: NO). In this case, the controller 23 sets the first period to 1 (month) which is the same as that of the installation environment information "NORMAL", with reference to the relation shown in Fig. 2 (step S5).

For example, if the current time is September, the maintenance time is December. Therefore, the maintenance time falls into the special period (step S4: YES). In this case, the controller 23 sets the first period to 3 (month) corresponding to the special period of the installation environment information "heavy snow", with reference to the relation shown in Fig. 2 (step S6). Since it is very difficult to carry out maintenance of the fuel cell power generation apparatus 1 due to the heavy snow during such a special period, the first period: 3 (month) is set longer than the normal first period: 1 (month).

The controller 23 sets the notification time based on the maintenance time and the first period (step S7). When the maintenance time does not fall into the special period, the controller 23 sets the notification time to 1 month before from the maintenance time, i.e., 2 months after from the current point, based on information in which the time period from the current time to the maintenance time: G is 3 (month), and the first period is 1 (month). On the other hand, when the maintenance time falls into the special period, the controller 23 sets the notification time to 3 months before from the maintenance time, i.e., current time, based on information in which the time period from the current time to the maintenance time: G is 3 (month), and the first period is 3 (month).

The controller 23 obtains a date of the current time, and determines whether or not the current time has reached the set notification time (step S8). In this case, if the maintenance time does not falls into the special period, the notification time its 2 months after from the current time. Therefore, the controller 23 determines that the current time has not reached the notification time yet (step S8: NO). Therefore, the process returns to step S1, and the steps S 1 to S8 are repeated until the current time has reached the notification time.

On the other hand, if the maintenance time falls into the special period, the controller 23 determines that the current time has reached the notification time (step S8: YES). Therefore, the notification device 26 notifies at the notification time that maintenance of the fuel cell power generation apparatus 1 should be carried out (step S9). This allows the maintenance operator and the user to know that the maintenance will be necessary in advance at the notification time earlier than the maintenance time. As a result, the maintenance is carried out at a time in an adequate period from the notification time to the maintenance time, as well as at the maintenance time.

When the maintenance operator resets the accumulated energization time in the operation information obtaining section 24 to zero, the notification device 26 ends the notification.

In accordance with the fuel cell power generation apparatus 1, the maintenance time is specified based on the operation amount such as the accumulated energization time. The maintenance time is set appropriately depending on an operation status of the fuel cell power generation apparatus 1. Therefore, the maintenance of the components for which the maintenance is performed, can be carried out efficiently at a time which is not much earlier than the maintenance time.

The first period is set based on the installation environment information such as the area information, and the notification time is decided such that the notification time is before the maintenance time by the first period. Because of this, the notification time is adapted to an environment in which the fuel cell power generation apparatus 1 is installed. Therefore, a period from the notification time to the maintenance time does not become unnecessarily long, and a usage period of the components for which the maintenance is performed does not become a waste. In addition, since the maintenance is carried out at a time between the period from the notification time to the maintenance time and the maintenance time, reduction of a power generation efficiency due to a delay of the maintenance can be prevented.

Since the controller 23 notifies at the notification time that the maintenance is necessary, the user or the like can easily recognize the maintenance time.

In a case where the installation environment information inputting section 25 automatically obtains the installation environment information via a GPS, a communication line, etc., a burden placed on a person which obtains the installation environment information can be mitigated.

### «Embodiment 3»

In Embodiment 2, the relation between the installation environment information, special periods, and the first periods, shown in Fig. 2 is prestored in the data storage section of the controller 23. When the installation environment information inputting section 25 inputs the installation environment information, the controller 23 specifies the special period corresponding to the installation environment information. By comparison, in Embodiment 3, a special period is derived based on learning information obtained by learning about the environment in which the fuel cell power generation apparatus 1 is installed, and the installation environment information inputting section 25 inputs the special period as the installation environment information. Because of this, the installation environment information input by the installation environment information inputting section 25 becomes the special period. Therefore, the relation between the installation environment information (special period) and the first periods is stored in the data storage section of the controller 23.

Specifically, the installation environment information inputting section 25 inputs as the installation environment information, learning information obtained by learning about the environment in which the fuel cell power generation apparatus 1 is installed.

The installation environment information inputting section 25 includes a calendar section, a calculator section, and a data storage section. The calendar section and the calculator section are constituted by, for example, a CPU and a memory. The data storage section is constituted by, for example, a memory. The installation environment information inputting section 25 stores detected values from sensors such as a temperature detector and a humidity sensor, which are disposed in a location where the fuel cell power generation apparatus 1 is installed, a temperature detector disposed at a water supply passage connecting a water supply source to the fuel cell power generation apparatus 1, etc., and analyzes these detected values to obtain the installation environment information.

Next, description will be given of an exemplary operation of the fuel cell power generation apparatus 1 which relates to notification of the maintenance. The steps other than step S3 and step S4 of Fig. 3 are the same as those of Embodiment 2 and will not be described.

The installation environment information inputting section 25 obtains the installation environment information (step S3). For example, the calculator section obtains a dry-bulb temperature and a relative humidity in the environment in which the fuel cell power generation apparatus 1 is installed, from a thermo-hygrograph. The calculator section calculates an average air temperature and an average humidity for each predetermined time period (e.g., one day, one week), and stores in the data storage section, the average air temperature and the average humidity in correspondence with calendar information in the calendar section. The calculator section calculates a ratio of days in which the average air temperature is equal to or lower than a predetermined value, with respect to a specified time period (e.g., 1 month) which is a set of a plurality of predetermined times, or a ratio of days with which the average air humidity is equal to or higher than a predetermined value, with respect to a specified time period (e.g., 1 month) which is a set of a plurality of predetermined times, based on the data stored in the data storage section. The installation environment information inputting section 25 determines that a period in which the ratio with which the average air temperature is equal to or higher than the predetermined value is a prescribed value or more, or the ratio with which the average humidity is equal to or higher than the predetermined value is a prescribed value or more is a special period, and obtains the special period as the installation environment information.

The installation environment information indicates the special period, and therefore the controller 23 determines whether or not the maintenance time falls into the installation environment information which is the special period (step S4).

In accordance with the fuel cell power generation apparatus 1 having the above configuration, the installation environment information is derived based on the learning information stored for a specified period. Thereby, in cases where the installation environment information is decided based on data which is more likely to change day to day, such as the temperature and the humidity, the installation environment information is stable and its reliability improves. This makes it possible to derive a more appropriate notification time. Therefore, the first period does not become inappropriately too long, and the maintenance of the components for which the maintenance is performed can be carried out efficiently. In addition, the first period is not so short, and it is possible to avoid a situation in which the maintenance time passes without the maintenance. Moreover, since carrying out the maintenance within the special period is avoided, a burden placed on the maintenance operator can be alleviated.

### «Other embodiments»

In Embodiment 2, one installation environment information is input. Alternatively, two or more installation environment information may be input. For example, the installation environment information inputting section 25 inputs "heavy rain (rainy season)" and "typhoon" shown in Fig. 2, as the installation environment information. The corresponding special periods are June, July and August, September, respectively, and therefore the special period is June to September. In this case, the notification time is more adapted to the installation environment.

Although in Embodiment 2, the installation environment information, the special periods, and the first periods are prestored in association with each other, the special periods and the first periods may be prestored in association with each other. In this case, day and hour information input from the calendar section in the installation environment information inputting section 25 is input as the installation environment information. The controller 23 derives a special period corresponding to day and hour information with reference to a predetermined relation. The controller 23 determines whether or not a maintenance time falls into the special period, and specifies a first period in the case where the maintenance time falls into the special period and a first period in the case where the maintenance time does not fall into the special period, with reference to the predetermined relation. This relation between the special period and the first period is set according to, for example, a degree of difficulty of the maintenance work. For example, December to February are time periods when an outside air temperature is very low and it is difficult to carry out the maintenance work. Because of this, the first period is set to 3 months with respect to the special period: December to February. June and July are a rain season in which there is heavy rain and days when the maintenance can be performed are limited. Because of this, the first period is set to 2 months with respect to the special period: June and July. August to November are a time period when it is warm and the maintenance work is carried out easily. Because of this, the first period is set to 1 month with respect to the period other than the special period. Thus, by setting the first period to 3 months with respect to the special period: December to February, the maintenance can be performed in a period when the maintenance work is carried out easily. In addition, by setting the first period to 2 months with respect to the special period: June, July, the maintenance work can be carried out in April, May when there is relatively less rain.

As shown in Fig. 2, in Embodiment 2, the area information as the installation environment information, the special periods and the first periods are prestored in association with each other. By comparison, destination locations as the installation environment information, the special periods and the first periods may be prestored in association with each other. For example, in heavy snow areas such as Hokkaido, Tohoku, and Hokuriku, it is difficult to carry out the maintenance work for 3 months of December to February, because of heavy snow. On the other hand, in time periods other than December to February, there is no fear of heavy snow and it is relatively easy to carry out the maintenance work. Because of this, the first period is set to 3 months with respect to destination locations: Hokkaido, Tohoku, and Hokuriku. The first period is set to 2 months with respect to destination location: Okinawa. The first period is set to 1 month with respect to destination location: other areas. Based on this, regarding the destination locations: Hokkaido, Tohoku, and Hokuriku, when the maintenance time is January, the controller 23 determines that October which is 3 months before from January is a notification time, and causes the notification device 26 to notify that the maintenance will be necessary, from October. This allows the user to know that the maintenance will be necessary 3 months after, at a time point of October when there is no fear of heavy snow. When the maintenance time is May, the controller 23 causes the notification device 26 to notify that the maintenance will be necessary, from February which is 3 months before from May. In this case, the maintenance operator himself/herself can determine that the maintenance time can be delayed to March or April when there is no fear of heavy snow. This can suppress a reduction in a power generation efficiency due to a delay of the maintenance.

In Embodiment 2 and Embodiment 3, the first period is set to a particular period such as 1 month or 3 months. By comparison, when the maintenance time falls into the special period, the first period may be set such that the notification time comes before start of the special period. This allows the maintenance to be carried out before the start of the special period. As a result, a necessity of carrying out the maintenance under severe environmental conditions can be reduced, and a burden placed on the maintenance operator can be further alleviated.

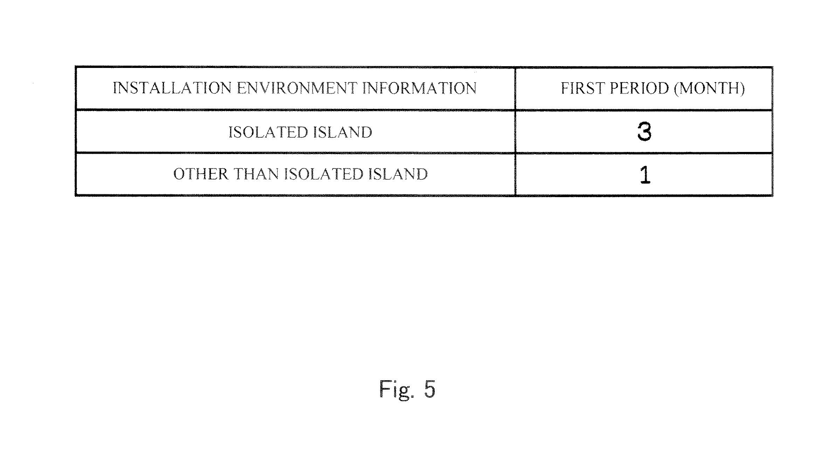

In Embodiment 2 and Embodiment 3, the special period when it is more difficult to carry out the maintenance than in another period is set. By comparison, a special area where it is more difficult to carry out the maintenance than in another area may be set. For example, as shown in Fig. 5, an isolated island is set as the installation environment information. The isolated island is included in the special area where it is more difficult to carry out the maintenance than in another area. Because of this, the first period: 3 (month) corresponding to "isolated island" which is the special area is set longer than the first period: 1 (month) corresponding to "other than isolated island" which is not the special area. This allows the maintenance operator to schedule the maintenance work within an adequate period even for the location to which the maintenance operator goes less easily.

In Embodiment 2 and Embodiment 3, the maintenance time is derived based on one operation amount such as the accumulated energization time. Alternatively, the maintenance time may be derived based on two or more operation amounts. For example, when the operation amount is obtained based on an accumulated energization time and an accumulated power generation amount, the controller 23 calculates a maintenance time corresponding to the accumulated energization time and a maintenance time corresponding to the accumulated power generation amount, and specifies as the maintenance time, either one of the maintenance times which comes earlier. This can notify the maintenance according to device statuses of the fuel cell power generation apparatus 1.

Although in Embodiment 3, the special period is derived by learning based on the temperature and the humidity, the present invention is not limited to this. For example, the special period may be learned based on an air pressure measured by an air pressure meter, a rain quantity measured by a rain quantity meter, a wind speed measured by a wind speed meter, or weather information (e.g., rain, snow) obtained via a communication line such as an Internet.

Although in Embodiment 3, the special period is derived by learning, the present invention is not limited to this. For example, the special area where it is more difficult to carry out the maintenance than in another area may be derived by learning. Specifically, an area where a yearly average air temperature is very low is learned as an extremely cold special area and an area where there is heavy rain is learned as a heavy rain special area. In this case, for example, the controller 23 decides as the notification time, a time which is earlier than the maintenance time by the first period corresponding to the special area. In this case, the predetermined period corresponding to the special area may be set to 3 months for the extremely cold special area, 2 months for the heavy rain special area, and 1 month for another area. Thereby, a person need not input the installation environment information, and thus, a burden placed on the person can be alleviated.

### Industrial Applicability

A fuel cell power generation apparatus of the present invention is useful as a fuel cell power generation apparatus, or the like which allows maintenance to be carried out at a more appropriate time.

### Reference Sings Lists

- 1: fuel cell power generation apparatus
- 23: controller
- 24: operation information obtaining section
- 25: installation environment information inputting section
- 26: notification device

## Claims

1. A fuel cell power generation apparatus for which maintenance is performed, comprising:
an installation environment information inputting section which inputs installation environment information of the fuel cell power generation apparatus;
a notification device which notifies that maintenance of the fuel cell power generation apparatus should be carried out, at a notification time set before a maintenance time of the fuel cell power generation apparatus; and
a controller configured to set a first period between the maintenance time and the notification time based on the installation environment information input by the installation environment information inputting section.

2. The fuel cell power generation apparatus according to Claim 1, further comprising:
an operation amount obtaining section which obtains an operation amount of the fuel cell power generation apparatus;
wherein the controller is configured to specify the maintenance time based on the operation amount.

3. The fuel cell power generation apparatus according to Claim 2,
wherein the operation amount obtaining section determines the operation amount based on at least one of:
an accumulated power generation time of the fuel cell power generation apparatus, an accumulated power generation amount of the fuel cell power generation apparatus, and an accumulated number of times of power generation of the fuel cell power generation apparatus;
a time that passes after the fuel cell power generation apparatus is installed;
an accumulated energization time for which at least either one of the controller and an auxiliary device of the fuel cell power generation apparatus is supplied with electric power;
an accumulated operation time and an accumulated number of times of operation of a device constituting the fuel cell power generation apparatus; and
an accumulated heat supply amount of the fuel cell power generation apparatus.

4. The fuel cell power generation apparatus according to any one of Claims 1 to 3,
wherein the controller is configured to set the first period longer, when it is determined that the maintenance time falls into a special period when it is more difficult to carry out the maintenance than in another period, based on the installation environment information, than when it is determined that the maintenance time does not fall into the special period, based on the installation environment information.

5. The fuel cell power generation apparatus according to Claim 4,
wherein the controller is configured to set the first period such that the notification time comes before start of the special period, when it is determined that the maintenance time falls into the special period.

6. The fuel cell power generation apparatus according to any one of Claims 1 to 5,
wherein the controller is configured to set the first period longer, when it is determined that an installation location of the fuel cell power generation apparatus falls into a special area where it is more difficult to carry out the maintenance than in another area, based on the installation environment information, than when it is determined that the installation location of the fuel cell power generation apparatus does not fall into the special area, based on the installation environment information.

7. The fuel cell power generation apparatus according to any one of Claims 1 to 6,
wherein the installation environment information inputting section inputs as the installation environment information, at least one of a signal input by a temperature detector disposed at an installation location of the fuel cell power generation apparatus, and a signal input by a temperature detector disposed at a water supply passage connecting a water supply source to the fuel cell power generation apparatus.

8. The fuel cell power generation apparatus according to any one of Claims 1 to 7,
wherein the installation environment information inputting section inputs as the installation environment information, at least one of position information of a position at which the fuel cell power generation apparatus is installed, elevation information of an elevation at which the fuel cell power generation apparatus is installed, and maintenance company information of a maintenance company who carries out the maintenance.

9. The fuel cell power generation apparatus according to any one of Claims 1 to 8,
wherein the installation environment information inputting section inputs as the installation environment information, learning information obtained by learning about an environment in which the fuel cell power generation apparatus is installed.
